# EUROPEAN PATENT SPECIFICATION

(11) **EP 3 984 836 B1**
(45) Date of publication and mention of the grant of the patent: **09.08.2023**
(21) Application number: 20201840.4
(22) Date of filing: 14.10.2020
(51) Int. Cl.: B60R 22/40

(54) **A VEHICLE-SENSITIVE SENSOR AND SELF-LOCKING BELT-RETRACTOR**
EIN FAHRZEUG-EMPFINDLICHER SENSOR UND EIN SELBSTVERRIEGELTER GÜRTAUFROLLER
UN CAPTEUR SENSIBLE AU VÉHICULE ET UN ENROULEAUR DE CEINTURE AUTOBLOQUÉ

(43) Date of publication of application: 20.04.2022
(73) Proprietor: Autoliv Development AB, 447 83 Vårgårda (SE)
(72) Inventor: Atwadkar, Abhijeet, 562114 Bangalore (IN); Rathore, Narendra, 562114 Bangalore (IN)
(74) Representative: Müller Verweyen

(56) References cited:
- US-A- 4 262 858
- US-A1- 2006 243 846
- US-A1- 2008 217 458

## Description

The invention relates to a vehicle-sensitive sensor for a self-locking belt retractor, comprising a ball-shaped sensor mass, a sensor housing comprising a nest, in which the sensor mass is moveable and kept, and a sensor lever. The sensor lever comprises a locking pawl which is adapted to engage in a steering disc of the belt retractor, a resting pin which protrudes through the nest and a bearing portion. The bearing portion of the sensor lever is pivot-mounted at a bearing support of the sensor housing creating a pivot axis, wherein the sensor lever is adapted to pivot about the pivot axis and to engage the locking pawl by force applied to the mass of the sensor lever at its center of gravity when the sensor mass is moved away from the resting pin. Further on, the invention relates to a corresponding self-locking belt-retractor.

Automotive occupant restraint systems such as seat belt systems typically have a lap and shoulder belt portion for restraining the occupant in the event of an impact or rollover. To enhance the comfort and convenience provided by the seat belt system, retractors are provided which allow the belt webbing to be freely paid-out and retracted when the vehicle is not subjected to unusual acceleration forces or inclination. In the event of exposure to such forces, a sensor locks the retractor to prevent additional extraction of the belt webbing. Thus, the retractor locks in a manner to enable the seat belt webbing to restrain the occupant. One category of such sensor is a vehicle-sensitive sensor. These sensors are sensitive to acceleration forces acting on the vehicle. The vehicle-sensitive sensor must respond to acceleration loads acting in various axes and planes. Primarily important are impacts to the vehicle creating acceleration loads acting in the horizontal plane, such as front, rear, or side impact conditions. However, if a rollover event has occurred, it is important that the sensor locks to restrain the occupant.

Another category would be webbing-sensitive sensors. These devices operate much in the manner of a centrifugal clutch and sense the rotational speed of the retractor spool, such that when extremely high angular acceleration of the retractor spool occurs associated with rapid extraction of belt webbing, the webbing-sensitive sensor engages to lock the retractor.

Typical vehicle-sensitive sensors respectively inertial retractor locking systems utilize a pendulum or rolling ball mass to activate a locking lever which engages directly or indirectly with a ratchet wheel respectively a steering wheel of the retractor webbing spool which acts as a spool lock. Vehicle-sensitive sensors utilizing a rolling ball mass often generate undesired vibration noise.

In US 4,867,390 a ball detector for a safety-belt band reeling mechanism is shown in which the end of a locking lever interacts with teeth of a wheel for locking the reeling mechanism. The locking lever is mounted on a supporting structure and rotatable about a rotation axle, wherein the locking lever is moveable by means of the ball between a retracted position and a position for locking the reeling mechanism. Therefore, the locking lever has a contact area with the ball between the rotation axle and the interacting end of the locking lever.

WO 2008/087066 A1 discloses a sensor unit for activating a blocking mechanism for a seat-belt retractor, wherein a steering lever being pivotable around an axis with an output side pawl which can engage into a blocking mechanism. The steering lever comprises a cap-like element which overlaps und compasses the surface of the sensor ball and is positioned in a housing-like receptable. The receptable has an opening through which the steering level is guided to the blocking mechanism, wherein the opening and the cap-like element are on the same side of said axis.

In US 4,534,521 an inertia sensor in a belt reel for vehicle belts is shown, wherein arms form a bell crank which surrounds a sensor ball. The bell crank is rotatable around a bearing pin and is located on one side of a vertical plan through the bearing pin.

US 2008/0217458 A1 shows another vehicle sensitive seat belt retractor inertial locking system with a sensor ball, wherein the ball sensor has arms which form a bell crank which surrounds the sensor ball. The bell crank is pivotable about a pivot point and is located on one side of a vertical plan through the pivot point. The lower arm extends to the lower surface of the ball mass and includes an upwardly projecting post support.

WO 2014/093369 A1 discloses a seatbelt retractor inertial locking system for motor vehicle belt restraint systems, wherein a ball mass rests on a ball nest which forms a generally concave surface on which the ball mass is cradled to remain in its normal position. A locking lever is rotatably supported for pivoting motion about a shaft which defines a pivot axis. The locking lever extends over the upper surface of the ball mass. In an actuation, the ball mass, through its contact with a locking lever at a contact area, presses the locking lever about the axis to a position in which an edge of the locking lever engages with a ratchet wheel, causing the associated retractor to lock. US 2006/243846 A1 discloses a vehicle-sensitive sensor according to the preamble of claim 1.

In view of this prior art it is the object of the invention to provide an improved vehicle-sensitive sensor and an improved self-locking belt-retractor.

The object is solved by a vehicle-sensitive sensor comprising the features of claim 1 and a corresponding self-locking belt-retractor comprising the features of claim 13. Further improvements are contained in the sub claims, in the figures and in the related description.

According to the basic idea of the invention a vehicle-sensitive sensor for a self-locking belt retractor is suggested, comprising a ball-shaped sensor mass, a sensor housing comprising a nest, in which the sensor mass is moveable and kept, and a sensor lever. The sensor lever comprises a locking pawl, which is adapted to engage in a steering disc of the belt retractor, a resting pin which protrudes through the nest and a bearing portion. The bearing portion of the sensor lever is pivot-mounted at a bearing support of the sensor housing creating a pivot axis, wherein the sensor lever is adapted to pivot about the pivot axis and to engage the locking pawl by force applied to the mass of the sensor lever at its center of gravity when the sensor mass is moved away from the resting pin. It is suggested that in a mounting position the sensor lever has two sections separated by a vertical plane through the pivot axis, wherein a first section is on a first side of the vertical plane and a second section is on a second side opposite to the first side, wherein the resting pin is in the first section of the sensor lever, and the locking pawl and the center of gravity of the sensor lever are in the second section.

The nest of the sensor housing forms a generally concave surface on which the ball-shaped sensor mass is cradled to remain in its normal position. The resting pin protrudes preferably through the lowest point of the nest. In an unaccelerated and upright position the sensor mass pushes the resting pin and the respective sensor lever down when the vehicle-sensitive sensor is in a mounting position. In a neutral state the mounting position allows the intended operation of the vehicle-sensitive sensor in a vehicle. Thus, the mounting position corresponds to the orientation of the vehicle-sensitive sensor in a vehicle, wherein the vehicle is unaccelerated, upright with respect to the gravity vector and on level ground. Thus, the vehicle-sensitive sensor is in an unlocked state.

The forces applied to the mass of the sensor lever at its center of gravity may be inertia forces and/or gravitational forces.

The vertical plane is preferably vertical with respect to the gravity in the mounting position of the vehicle-sensitive sensor.

The arrangement of the resting pin in the first section and the locking pawl and the center of gravity in the second section allows the center of gravity of the sensor lever and the center of gravity of the sensor mass close to the pivot axis. This reduces the combined rotational mass inertia of these two parts. Therefore, unwanted oscillations of these parts can be reduced, which leads to less vibrations and noise emissions. Furthermore, said arrangement allows short and similar lever lengths on both sides of the pivot axis which enables a reduction of the size of the vehicle-sensitive sensor and a less elastic deflection in the sensor lever due to reduced torque with shorter lever lengths.

It is further suggested that the center of gravity of the sensor lever is higher than the pivot axis in the mounting position. This way the center of gravity of the ball-shaped sensor mass, which is preferably centered within the sensor mass, are matched with regard to the vertical position. Resulting in a similar and improved vibrational behavior to vehicle induced vibrations which are below any accelerations which move the sensor mass away from the resting pin.

Furthermore, it is suggested that the center of gravity of the sensor lever is higher than the resting pin in the mounting position. This allows to take an offset of the center of gravity of the sensor mass into account, which cannot be located directly next to the resting pin due the needed mass and limited density of the sensor mass. A similar vertical position of the center of gravity of the sensor mass and center of gravity of the sensor level is therefore possible, leading to better vibrational characteristics.

In a preferred embodiment a contact point of the resting pin with the sensor mass and the pivot axis are aligned horizontally in a mounting position. Such an alignment keeps the radius created during the actuation of the sensor lever minimal when the sensor mass is moved away from the resting pin. Therefore, it is possible to minimize the change of the length of the lever from the pivot axis to the contact point during activation of the vehicle-sensor, resulting in a more defined locking characteristic. The expression horizontally aligned does included a possible offset up to 2 mm, preferably up to 1 mm.

Further on, it is suggested that the sensor lever comprises an upper arm locking the sensor mass in the nest. The upper arm keeps the sensor mass from falling out of the sensor housing, wherein the sensor mass is able to move within the housing to some extent. Furthermore, the upper arm actuates the engagement of the locking pawl in a rollover situation of the vehicle, when the vehicle-sensitive sensor is upside down. If sensor is subject to very high acceleration the sensor mass may push the upper arm of the sensor lever engaging the locking pawl. It may occur in preferred embodiments that the sensor mass pushes the upper arm oversteering the forces applied to the mass of the sensor lever in order to engage the locking pawl.

It is further suggested that the upper arm extends from the second side to the first side. This allows an easy installation process wherein the bearing portion of the sensor lever can be clicked into the bearing support of the sensor housing, wherein the sensor mass is already placed in the nest of the sensor housing.

Furthermore, it is suggested that the sensor lever has a nose which extends on the second side horizontally over the locking pawl in the mounting position. With the nose it is possible to shift the center of gravity of the sensor lever to the appropriate location with respect to horizontal and vertical distance to the pivot axis respectively to the bearing portion in a mounting position.

In a preferred embodiment the nose has a recess. The recess gives an opportunity to add mass to the sensor lever and thus to fine tune the sensitivity of the vehicle-sensitive sensor. Preferably, the recess is shaped close to or up to the center of gravity of the sensor lever, thus allowing to add mass in order to adjust the locking sensitivity without shifting the center of gravity of the sensor lever and changing the outer dimensions of the sensor lever.

Preferably, the vehicle-sensitive sensor comprises a sensor adapter to connect the sensor housing with a self-locking belt retractor respectively with a bearing plate of said retractor, wherein the sensor adapter comprises noise dampening slots.

Preferably, the noise dampening slots in the sensor adapter, which is preferably an integral part, are formed in the lower part of the sensor adapter, wherein the sensor housing is attached at the upper part. In a preferred embodiment the lower part comprises an inverted L-shape structure over an E-shape structure, having three junction areas.

The noise dampening slots reduce the conduction of vibrations and/or structure-borne noise from the sensor housing to the self-locking belt-retractor and thus leading to a quieter vehicle-sensitive sensor respectively a quieter self-locking belt-retractor.

It is further suggested that the sensor adapter is made of a thermoplastic copolyester. Preferably, the thermoplasic copolyester is TPE-E. This material allows a good compromise between stability, noise dampening and production costs.

Furthermore, it is suggested that the nest of the sensor housing comprises noise dampening slots. These slots reduce the creation and conduction of noise and structure-borne noise resulting from movements of the ball-shaped sensor mass in the nest.

In a preferred embodiment the ball-shaped sensor mass is a rubber-coated and/or plastic-coated metal ball. The rubbercoating and/or plastic-coating reduces noise generation upon vibrational movement of the ball-shaped sensor mass with respect to the sensor housing while enabling a high density and thus loud material like metal, e.g. steel, as a core in order to reduce the overall size of the ball-shaped sensor mass with a given mass required.

According to the basic idea of the invention a self-locking belt retractor with a steering disc and a vehicle-sensitive sensor according to one of the claims 1 to 12 is suggested. Such a self-locking belt retractor with an aforementioned vehicle-sensitive sensor features vibration noise reduction and cost savings.

Furthermore, it is suggested that the locking pawl engages in the steering disc below the pivot axis or is horizontally aligned with the pivot axis. Further preferably, the locking pawl engages in the steering disc in the upper half of the steering disc on the declining side. Therein it is favorable when the locking pawl engages in the steering disc close to the top of the steering disc where the horizontal movement portion towards the pivot axis is dominant over the vertical movement portion downwards.

This way, the engagement of the locking pawl with the steering wheel is very reliable and the locking pawl does not rebound off the teeth of the steering disc. At the same time a release of the engagement and thus unlocking of the steering disc is possible without any unwanted self-locking effects.

In a preferred embodiment the sensor housing is mountable at the sensor adapter at an adjustable A-angle and/or the sensor adapter is mountable at a bearing plate of the self-locking belt-retractor at an adjustable B-angle.

The A-angle adjustment of the vehicle-sensitive sensor allows a compensation of an inclination to the left or right of the self-locking belt retractor mounted in a vehicle, so that the vehicle-sensitive sensor is oriented in the foreseen mounting orientation respectively mounting position.

The B-angle adjustment of the vehicle-sensitive sensor allows a compensation of an inclination to the front or back of the self-locking belt retractor mounted in a vehicle, so that the vehicle-sensitive sensor is oriented in the foreseen mounting orientation respectively mounting position.

In the following the invention shall be illustrated on the basis of preferred embodiments with reference to the accompanying drawings, wherein:
- Fig. 1: shows a vehicle-sensitive sensor;
- Fig. 2: shows a vehicle-sensitive sensor in a top view;
- Fig. 3: shows a sensor adapter;
- Fig. 4: shows a sensor housing;
- Fig. 5: shows a sensor lever;
- Fig. 6: shows a self-locking belt retractor in an unlocked state; and
- Fig. 7: shows a self-locking belt in a locked state.

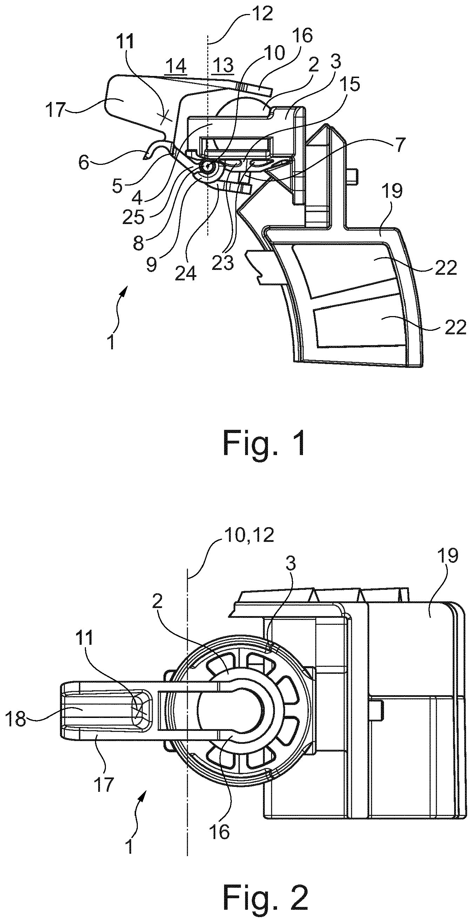

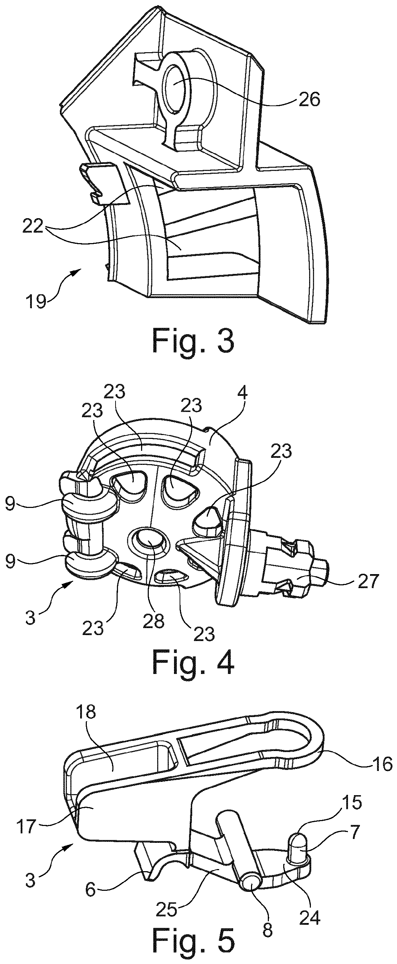

Figure 1 shows an embodiment of a vehicle-sensitive sensor 1 for a self-locking belt retractor 20 in a side view. A ball-shaped sensor mass 2 is positioned in a nest 4 of a sensor housing 3. The vehicle-sensitive sensor 1 is shown in a mounting position and is in an unlocked respectively unengaged state. The nest 4 has a concave surface on which the sensor mass 2 is cradled to remain in its normal position when the vehicle-sensitive sensor 1 is in an unaccelerated state. Thus, the sensor mass 2 is resting at the lowest point of the nest 4 where a resting pin 7 protrudes through a resting pin hole 28, see figure 4, in the nest 4. The resting pin 7 has a contact point 15 at its upper end. In the normal position the ball-shaped sensor mass 2 has a contact at the contact point 15 with the resting pin 7 and hold the resting pin 7 down due to its gravitational force. The ball-shaped sensor mass has preferably a diameter of 6 mm.

In case of an impact event and/or when the vehicle is subject to high accelerations the ball-shaped sensor mass 2 is moved away from the lowest point of the nest 4 and the contact point 15 of the resting pin 7. In this case no force is applied to the resting pin 7 and the resting pin 7 can further protrude through the nest 4.

The resting pin 7 is part of a sensor lever 5 which comprises a rod-shaped bearing portion 8. The bearing portion 8 is click locked with a bearing support 9 of the sensor housing 3. Said bearing support 9 has two C-shaped arms and thus the sensor lever 5 can be click-locked from the left side in the view of figure 1. The bearing portion 8 and the bearing support 9 form a hinge with a pivot axis 10. In alternative embodiments it is possible that the bearing portion 8 has one or more C-shaped arms and the bearing support 9 is rod-shaped. In either case the sensor lever 5 is pivot-mounted at the sensor housing 3.

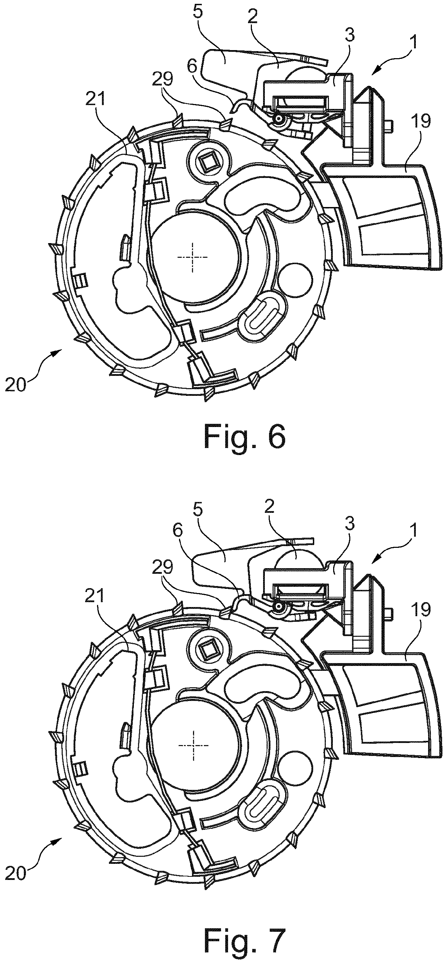

The sensor lever 5 further comprises a locking pawl 6 which is adapted to be lowered and to engage in a steering disc 21, see figure 7, of the self-locking belt retractor 20 when the sensor mass 2 is moved away from the resting pin 7.

The sensor lever 5 is pivotable around the pivot axis 10 wherein the sensor lever 5 extends horizontally to both sides of the pivot axis 10 as shown in figure 1. The sensor lever 5 can be partitioned into two sections 13,14 separated by a virtual vertical plane 12 through the pivot axis 10 and the gravity vector in the mounting position respectively mounting orientation as shown in figure 1.

The first section 13 is on the first side, which is the right side in figure 1. The first section 13 of the sensor lever 5 comprises the resting pin 7 which is positioned at the end of the first lever arm 24 and it comprises parts of an upper arm 16. The second section 14 is on the second side of the vertical plane 12. The second section 14 of the sensor lever 5 comprises a second lever arm 25, a locking pawl 6, and the center of gravity 11 of the sensor lever 5. Further on, the second section 14 comprises a nose 17, in which the center of gravity 11 of the sensor lever is located, and parts of the upper arm 16 extending from the nose 17.

Thus, the locking pawl 6 and the center of gravity 11 are on one side of the pivot axis 10 opposing the resting pin 7 on the other side.

The center of gravity 11 is higher located than the pivot axis 10 respectively the bearing portion 8 in the mounting position. Moreover, the center of gravity 11 of the sensor lever 5 is higher located than the resting pin 7 in the mounting position.

The upper arm 16 prevents the ball-shaped sensor 2 from escaping the sensor housing 3 in any case while allowing certain movement of the sensor mass 2 in order to leave the lowest point of the nest 4. In the event of a rollover of a vehicle the sensor mass 2 engages with the upper arm 16 and thus pivots the sensor lever 5 engaging the locking pawl 6.

The nest 4 of the sensor housing 3 has several noise dampening slots 23 which are arranged around the lowest point of the nest 4, where the resting pin 7 protrudes.

The sensor housing 3 is mounted at a sensor adapter 19 wherein the sensor adapter 19 is attachable to a self-locking belt retractor 20. The sensor adapter 19 can preferably be attached to a bearing plate of a self-locking belt retractor 20. Thus, the vehicle-sensitive sensor 1 is capable of locking a relative rotational movement between a bearing plate and a steering disc.

Figure 2 shows the vehicle-sensitive sensor in a top view. The upper arm 16 has a bow shape leaving an opening in-between. At the end of the upper arm 16 in the second section 13 of the sensor lever 5 the upper arm 16 shows an open, circular ring as it can be seen in figure 2. Figure 2 also shows the vertical plane 12 which is arranged through the pivot-axis 10.

The nose 17 can be seen form above where a recess 18 is visible which allows to add mass to the sensor lever 5 at a later stage without significantly shifting the center of gravity 11 and changing the external dimensions of the sensor lever 5.

Figure 3 shows the sensor adapter 19 of the embodiment of figures 1 and 2 in a perspective view. The lower part of the sensor adapter 19 has a combination of an E-shape in the background and an inverted L-shape in the foreground which both form two noise canceling slots 22. Therefore, transmission of structure-borne noise from the sensor housing 3 to a self-locking belt retractor 20 is reduced. The upper part of the sensor adapter 19 has a support 26 for the sensor housing 3. The support 26 of the sensor adapter 19 allows for A-angle adjustment so that sensor housing 3 can be mounted in an upright position when the corresponding self-locking belt retractor 20 is inclined to left or right in a vehicle.

Figure 4 shows a sensor housing 3 in a bottom view, wherein the noise reducing slots 23 in the nest 4 surround the resting pin hole 28 for the resting pin 7. A plug 27 which can be plugged in the support 26 extends from the nest 4. The bearing support 9 on the left side holds the bearing portion 8 of the sensor lever 5 in a pivotable position.

The sensor lever 5 is shown in figure 5. The contact point 15 is located at the end of the resting pin 7 wherein the resting pin 7 is located at the end of the first lever arm 24. The second lever arm 25 is located on the opposite side of the bearing portion 8. The locking pawl 6 for engaging into a steering disc 21 and the nose 17 with the upper arm 16 are arranged at the second lever arm 25.

Figure 6 shows parts of an embodiment of a self-locking belt retractor 20 in an unlocked state. A steering disc 21 has teeth 29 which are adapted to engage with the locking pawl 6 so that a clockwise rotation of the steering disc 21 can be locked or stopped. The sensor adapter 19 is mounted to a bearing plate, not shown, of the self-locking belt-retractor 20.

Figure 7 shows the embodiment of a self-locking belt retractor 20 of figure 6 in a locked state. The locking pawl 6 engages with one of the teeth 29 in the upper half of the steering disc 21, thus above its rotational axis. Further on, the engagement with one of the teeth 29 is on the declining side of the steering disc 21 when rotating clockwise.

The ball-shaped sensor mass 2 is forced to the left of the nest 4. Accordingly, the sensor mass 2 is moved away from the resting pin 7, allowing the sensor level 5 to rotate anticlockwise due to the forces applied to the mass of the sensor lever and to engage with the steering disc 21. As a result, further extraction of the belt webbing is stopped by means not shown in figure 6 and 7.

## Claims

1. A vehicle-sensitive sensor (1) for a self-locking belt retractor (20), comprising
- a ball-shaped sensor mass (2),
- a sensor housing (3) comprising a nest (4), in which the sensor mass (2) is moveable and kept, and
- a sensor lever (5) comprising
- a locking pawl (6) which is adapted to engage in a steering disc (21) of the belt retractor (20),
- a resting pin (7) which protrudes through the nest (4), and
- a bearing portion (8),
- wherein the bearing portion (8) of the sensor lever (5) is pivot-mounted at a bearing support (9) of the sensor housing (3) creating a pivot axis (10),
- wherein the sensor lever (5) is adapted to pivot about the pivot axis (10) and to engage the locking pawl (6) by force applied to the mass of the sensor lever (5) at its center of gravity (11) when the sensor mass (2) is moved away from the resting pin (7),
**characterized in that**
- in a mounting position the sensor lever (5) has two sections separated by a vertical plane (12) through the pivot axis (10), wherein
- a first section (13) is on a first side of the vertical plane and a second section (14) is on a second side opposite to the first side (13), wherein
- the resting pin (7) is in the first section (13) of the sensor lever (5), and
- the locking pawl (6) and the center of gravity (11) of the sensor lever (5) are in the second section (14).

2. A vehicle-sensitive sensor (1) according to claim 1, **characterized in that** the center of gravity (11) of the sensor lever (5) is higher than the pivot axis (10) in the mounting position.

3. A vehicle-sensitive sensor (1) according to claim 1 or 2, **characterized in that** the center of gravity (11) of the sensor lever (5) is higher than the resting pin (7) in the mounting position.

4. A vehicle-sensitive sensor (1) according to one of the claims 1 to 3, **characterized in that** a contact point (15) of the resting pin (7) with the sensor mass (2) and the pivot axis (10) are aligned horizontally in a mounting position.

5. A vehicle-sensitive sensor (1) according to one of the claims 1 to 4, **characterized in that** the sensor lever (5) comprises an upper arm (16) locking the sensor mass (2) in the nest (4).

6. A vehicle-sensitive sensor (1) according to one of the claims 1 to 5, **characterized in that** the upper arm (16) extends from the second side (14) to the first side (13).

7. A vehicle-sensitive sensor (1) according to one of the claims 1 to 6, **characterized in that** the sensor lever (5) has a nose (17) which extends on the second side (14) horizontally over the locking pawl (6) in the mounting position.

8. A vehicle-sensitive sensor (1) according to claim 7, **characterized in that** the nose (17) has a recess (18).

9. A vehicle-sensitive sensor (1) according to one of the claims 1 to 8, **characterized in that** the vehicle-sensitive sensor (1) comprises a sensor adapter (19) to connect the sensor housing (3) with a self-locking belt retractor (20), wherein the sensor adapter (19) comprises noise dampening slots (22).

10. A vehicle-sensitive sensor (1) according to claim 9, **characterized in that** the sensor adapter (19) is made of a thermoplastic copolyester.

11. A vehicle-sensitive sensor (1) according to one of the claims 1 to 10, **characterized in that** the nest (4) of the sensor housing (3) comprises noise dampening slots (23).

12. A vehicle-sensitive sensor (1) according to one of the claims 1 to 11, **characterized in that** the ball-shaped sensor mass (2) is a rubber and/or plastic-coated metal ball.

13. Self-locking belt-retractor (20) with a steering disc (21) and a vehicle-sensitive sensor (1) according to one of the claims 1 to 12.

14. Self-locking belt-retractor (20) according the claim 13, **characterized in that** the locking pawl (6) engages in the steering disc (21) below the pivot axis (10) or horizontally aligned with the pivot axis (10).

15. Self-locking belt-retractor (20) according to claim 13 or 14, **characterized in that** the sensor housing (3) is mountable at the sensor adapter (19) at an adjustable A-angle and/or the sensor adapter (19) is mountable at a bearing plate (23) of the self-locking belt-retractor (20) at an adjustable B-angle.

## Patentansprüche

1. Fahrzeugsensitiver Sensor (1) für einen selbstsperrenden Gurtaufroller (20), umfassend
- eine kugelförmige Sensormasse (2),
- ein Sensorgehäuse (3), umfassend eine Aufnahme (4), in der die Sensormasse (2) bewegbar ist und gehalten wird, und
- einen Sensorhebel (5), umfassend
- eine Sperrklinke (6), die angepasst ist, um in eine Lenkscheibe (21) des Gurtaufrollers (20) einzugreifen,
- einen Auflagestift (7), der durch die Aufnahme (4) vorsteht, und
- einen Lagerabschnitt (8),
- wobei der Lagerabschnitt (8) des Sensorhebels (5) an einen Lagerträger (9) des Sensorgehäuses (3) schwenkbar montiert ist, wobei eine Schwenkachse (10) erzeugt wird,
- wobei der Sensorhebel (5) angepasst ist, um um die Schwenkachse (10) herum zu schwenken und mittels einer Kraft, die auf die Masse des Sensorhebels (5) an seinem Schwerpunkt (11) ausgeübt wird, in die Sperrklinke (6) einzugreifen, wenn die Sensormasse (2) von dem Auflagestift (7) weg bewegt wird,
**dadurch gekennzeichnet, dass**
- in einer Montageposition der Sensorhebel (5) zwei Bereiche, die mittels einer vertikalen Ebene (12) durch die Schwenkachse (10) getrennt sind, aufweist, wobei
- sich ein erster Bereich (13) an einer ersten Seite der vertikalen Ebene befindet und sich ein zweiter Bereich (14) an einer zweiten Seite gegenüber der ersten Seite (13) befindet, wobei
- sich der Auflagestift (7) in dem ersten Bereich (13) des Sensorhebels (5) befindet und
- sich die Sperrklinke (6) und der Schwerpunkt (11) des Sensorhebels (5) in dem zweiten Bereich (14) befinden.

2. Fahrzeugsensitiver Sensor (1) nach Anspruch 1,
**dadurch gekennzeichnet, dass** der Schwerpunkt (11) des Sensorhebels (5) höher als die Schwenkachse (10) in der Montageposition ist.

3. Fahrzeugsensitiver Sensor (1) nach Anspruch 1 oder 2,
**dadurch gekennzeichnet, dass** der Schwerpunkt (11) des Sensorhebels (5) höher als der Auflagestift (7) in der Montageposition ist.

4. Fahrzeugsensitiver Sensor (1) nach einem der Ansprüche 1 bis 3,
**dadurch gekennzeichnet, dass** ein Berührungspunkt (15) des Auflagestifts (7) mit der Sensormasse (2) und der Schwenkachse (10) in einer Montageposition horizontal ausgerichtet ist.

5. Fahrzeugsensitiver Sensor (1) nach einem der Ansprüche 1 bis 4,
**dadurch gekennzeichnet, dass** der Sensorhebel (5) einen oberen Arm (16), der die Sensormasse (2) in der Aufnahme (4) sperrt, umfasst.

6. Fahrzeugsensitiver Sensor (1) nach einem der Ansprüche 1 bis 5,
**dadurch gekennzeichnet, dass** sich der obere Arm (16) von der zweiten Seite (14) zu der ersten Seite (13) erstreckt.

7. Fahrzeugsensitiver Sensor (1) nach einem der Ansprüche 1 bis 6,
**dadurch gekennzeichnet, dass** der Sensorhebel (5) eine Nase (17), die sich an der zweiten Seite (14) über die Sperrklinke (6) in der Montageposition horizontal erstreckt, aufweist.

8. Fahrzeugsensitiver Sensor (1) nach Anspruch 7,
**dadurch gekennzeichnet, dass** die Nase (17) eine Aussparung (18) aufweist.

9. Fahrzeugsensitiver Sensor (1) nach einem der Ansprüche 1 bis 8,
**dadurch gekennzeichnet, dass** der fahrzeugsensitive Sensor (1) einen Sensoradapter (19) umfasst, um das Sensorgehäuse (3) mit einem selbstsperrenden Gurtaufroller (20) zu verbinden, wobei der Sensoradapter (19) geräuschdämpfende Schlitze (22) umfasst.

10. Fahrzeugsensitiver Sensor (1) nach Anspruch 9,
**dadurch gekennzeichnet, dass** der Sensoradapter (19) aus einem thermoplastischen Copolyester hergestellt ist.

11. Fahrzeugsensitiver Sensor (1) nach einem der Ansprüche 1 bis 10,
**dadurch gekennzeichnet, dass** die Aufnahme (4) des Sensorgehäuses (3) geräuschdämpfende Schlitze (23) umfasst.

12. Fahrzeugsensitiver Sensor (1) nach einem der Ansprüche 1 bis 11,
**dadurch gekennzeichnet, dass** die kugelförmige Sensormasse (2) eine gummi- und/oder kunststoffbeschichtete Metallkugel ist.

13. Selbstsperrender Gurtaufroller (20) mit einer Lenkscheibe (21) und einem fahrzeugsensitiven Sensor (1) nach einem der Ansprüche 1 bis 12.

14. Selbstsperrender Gurtaufroller (20) nach Anspruch 13,
**dadurch gekennzeichnet, dass** die Sperrklinke (6) unterhalb der Schwenkachse (10) oder mit der Schwenkachse (10) horizontal ausgerichtet in die Lenkscheibe (21) eingreift.

15. Selbstsperrender Gurtaufroller (20) nach Anspruch 13 oder 14,
**dadurch gekennzeichnet, dass** das Sensorgehäuse (3) an dem Sensoradapter (19) in einem einstellbaren A-Winkel montierbar ist und/oder der Sensoradapter (19) an einer Lagerplatte (23) des selbstsperrenden Gurtaufrollers (20) in einem einstellbaren B-Winkel montierbar ist.

## Revendications

1. Capteur (1) sensible au véhicule destiné à un rétracteur de ceinture autobloquant (20), comprenant
- une masse de capteur en forme de bille (2),
- un logement de capteur (3) comprenant un emboîtement (4), dans lequel la masse de capteur (2) est mobile et maintenue, et
- un levier de capteur (5) comprenant
- un cliquet de blocage (6) qui est conçu pour venir en prise dans un disque d'orientation (21) du rétracteur de ceinture (20),
- une broche d'appui (7) qui fait saillie à travers l'emboîtement (4), et
- une partie de palier (8),
- dans lequel la partie de palier (8) du levier de capteur (5) est montée pivotante au niveau d'un support de palier (9) du logement de capteur (3) en créant un axe de pivotement (10),
- dans lequel le levier de capteur (5) est conçu pour pivoter autour de l'axe de pivotement (10) et pour venir en prise avec le cliquet de blocage (6) par une force appliquée à la masse du levier de capteur (5) au niveau de son centre de gravité (11) lorsque la masse de capteur (2) est éloignée de la broche d'appui (7),
**caractérisé en ce que**
- dans une position de montage le levier de capteur (5) a deux sections séparées par un plan vertical (12) à travers l'axe de pivotement (10), dans lequel
- une première section (13) est sur un premier côté du plan vertical et une seconde section (14) est sur un second côté opposé au premier côté (13), dans lequel
- la broche d'appui (7) est dans la première section (13) du levier de capteur (5), et
- le cliquet de blocage (6) et le centre de gravité (11) du levier de capteur (5) sont dans la seconde section (14).

2. Capteur (1) sensible au véhicule selon la revendication 1,
**caractérisé en ce que** le centre de gravité (11) du levier de capteur (5) est plus haut que l'axe de pivotement (10) dans la position de montage.

3. Capteur (1) sensible au véhicule selon la revendication 1 ou 2,
**caractérisé en ce que** le centre de gravité (11) du levier de capteur (5) est plus haut que la broche d'appui (7) dans la position de montage.

4. Capteur (1) sensible au véhicule selon l'une des revendications 1 à 3,
**caractérisé en ce qu'**un point de contact (15) de la broche d'appui (7) avec la masse de capteur (2) et l'axe de pivotement (10) sont alignés horizontalement dans une position de montage.

5. Capteur (1) sensible au véhicule selon l'une des revendications 1 à 4,
**caractérisé en ce que** le levier de capteur (5) comprend un bras supérieur (16) bloquant la masse de capteur (2) dans l'emboîtement (4).

6. Capteur (1) sensible au véhicule selon l'une des revendications 1 à 5,
**caractérisé en ce que** le bras supérieur (16) s'étend du second côté (14) au premier côté (13).

7. Capteur (1) sensible au véhicule selon l'une des revendications 1 à 6,
**caractérisé en ce que** le levier de capteur (5) a un nez (17) qui s'étend sur le second côté (14) horizontalement par-dessus le cliquet de blocage (6) dans la position de montage.

8. Capteur (1) sensible au véhicule selon la revendication 7,
**caractérisé en ce que** le nez (17) a un évidement (18).

9. Capteur (1) sensible au véhicule selon l'une des revendications 1 à 8,
**caractérisé en ce que** le capteur (1) sensible au véhicule comprend un adaptateur de capteur (19) pour relier le logement de capteur (3) à un rétracteur de ceinture autobloquant (20), l'adaptateur de capteur (19) comprenant des fentes d'atténuation de bruit (22).

10. Capteur (1) sensible au véhicule selon la revendication 9,
**caractérisé en ce que** l'adaptateur de capteur (19) est fabriqué dans un copolyester thermoplastique.

11. Capteur (1) sensible au véhicule selon l'une des revendications 1 à 10,
**caractérisé en ce que** l'emboîtement (4) du logement de capteur (3) comprend des fentes d'atténuation de bruit (23).

12. Capteur (1) sensible au véhicule selon l'une des revendications 1 à 11,
**caractérisé en ce que** la masse de capteur en forme de bille (2) est une bille en métal revêtue de caoutchouc et/ou de plastique.

13. Rétracteur de ceinture autobloquant (20) avec un disque d'orientation (21) et un capteur (1) sensible au véhicule selon l'une des revendications 1 à 12.

14. Rétracteur de ceinture autobloquant (20) selon la revendication 13,
**caractérisé en ce que** le cliquet de blocage (6) vient en prise dans le disque d'orientation (21) en dessous de l'axe de pivotement (10) ou aligné horizontalement avec l'axe de pivotement (10).

15. Rétracteur de ceinture autobloquant (20) selon la revendication 13 ou 14,
**caractérisé en ce que** le logement de capteur (3) peut être monté au niveau de l'adaptateur de capteur (19) selon un angle A ajustable et/ou l'adaptateur de capteur (19) peut être monté au niveau d'une plaque de palier (23) du rétracteur de ceinture autobloquant (20) selon un angle B ajustable.
